Europäisches Patentamt

European Patent Office

Office européen des brevets

(19)

(11) Publication number: **0 312 023**

**A2**

# EUROPEAN PATENT APPLICATION

(21) Application number: **88116952.8**

(22) Date of filing: **12.10.88**

(51) Int. Cl.4: **F16L 47/00 , F16L 33/00**

(30) Priority: **16.10.87 FI 874576**

(43) Date of publication of application:
**19.04.89 Bulletin 89/16**

(84) Designated Contracting States:
**AT BE CH DE ES FR GB GR IT LI LU NL SE**

(71) Applicant: **EXEL OY**
**Läkkisepänkuja 5**
**SF-00620 Helsinki(FI)**

Applicant: **RAUMA-REPOLA OY**
**Snellmanninkatu 13**
**SF-00170 Helsinki(FI)**

(72) Inventor: **Kivi, Ilkka**
**Haapaniemenkatu 12 d A 104**
**SF-00530 Helsinki(FI)**
Inventor: **Manner, Tapio**
**Ukonkivenpolku 4 R 136**
**SF-01610 Vantaa(FI)**
Inventor: **Kuvaja, Kari**
**Kirkkoladontie 22 A**
**SF-33560 Tampere(FI)**
Inventor: **Terävä. Jorma**
**Nikinväylä 1 C 19**
**SF-33580 Tampere(FI)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) Method for fixing a connecting piece to a product made of a composite material, and a connecting piece used in the method.

(57) The invention concerns a method for fixing a connecting piece (13) to a product (11) made of a composite material. As the connecting piece (13), such a piece is used as forms a shoulder (21) within the joint area (D). Simultaneously with the manufacture of the product (11), the reinforcing fibres (22) that proceed in the longitudinal direction (A) of the product (11) are guided within the joint area (D) so as to run along a turning path (B) of movement so that the reinforcing fibres (22) turn around said shoulder (21) and return in the opposite direction (C) of progress as unified continuous fibres, whereby, at the same time, both said product (11) of composite material and the joint (15) with the connecting piece (13) are formed.

FIG. 3

# Method for fixing a connecting piece to a product made of a composite material, and a connecting piece used in the method

The invention concerns a method for fixing a connecting piece to a product made of a composite material.

As a rule, composite material is understood as a combination of a binding-material matrix and reinforcing fibre material. As examples of binding-material matrices can be mentioned epoxy and polyester resins, certain thermoplasts, etc., and of reinforcing-fibre materials fibreglass and carbon fibres, polyethene fibres, etc.

At present, for example, pipes for the offshore technology are manufactured out of composite material that contains reinforcing fibres. Such pipes are of low weight and are therefore well suited to replace earlier metal pipes of stainless steel. A problem, however, consists of the joining technique for the pipes made of composite material. In particular in cases in which high tensile strains are applied to the joint, the present-day technology does not provide adequate solutions.

Of the prior art, the joining techniques most commonly used should be mentioned, of which the first one is glueing. A drawback of the glueing technique is unsatisfactory shear strength.

A second prior-art solution that is commonly used is a mechanical joint, a joint of said sort being described, e.g., in the US Patent No. 4,549,919. Such a prior-art mechanical joint requires an extra connecting piece, which increases the size and weight of the joint undesirably.

As a third prior-art technique should be mentioned superposed lamination. A drawback of this method is that the method requires a separate working step and involves increased amount of work. Further, the strength of the joint produced is low because of the little joint area. Also, more composite material is consumed.

The object of the invention is to provide an improvement of the prior-art methods for fixing a connecting piece to a product made of a composite material that contains reinforcing fibres.

The objectives of the invention are achieved by means of a method, which is characterized in that, as the connecting piece, such a piece is used as forms a shoulder within the joint area and that simultaneously with the manufacture of the product, the reinforcing fibres that proceed in the longitudinal direction of the product are guided within the joint area so as to run along a turning path of movement so that the reinforcing fibres turn around said shoulder and return in the opposite direction of progress as unified continuous fibres, whereby, at the same time, both said product of composite material and the joint with the connecting piece are formed.

In a preferred embodiment of the invention, the reinforcing fibre that passes around the bulging in the connecting piece is guided at least once across itself in the joint area, whereby a self-tightening joint is formed between the product and the connecting piece.

In one embodiment, the reinforcing fibre is made to turn around the shoulder in the connecting piece once or several times before the reinforcing fibre is guided in the opposite direction of progress.

Further, in a preferred embodiment, an uninterrupted, continuous fibre is used as the reinforcing fibre, whereby joints are formed simultaneously at both ends of the product.

In a further preferred embodiment, the turning path of movement of the reinforcing fibres takes place at an angle whose magnitude is equal to or larger than one half of the cone angle of the conical portion of the connecting piece defined at the same point.

The invention further concerns a connecting piece used in the method in accordance with the invention. The connecting piece in accordance with the invention is characterized in that the connecting piece comprises a conical portion and a shoulder.

By means of the method of the invention and by means of the connecting piece used in the method of the invention, several remarkable advantages are obtained. In the joint in accordance with the invention, the fibres are unified continuous fibres, because of which the joint in accordance with the invention also withstands high tensile strains reliably. By means of the alignment of the fibres in accordance with the invention, a self-tightening joint is provided between the product and the connecting piece, whereby the joint does not become loose. The joint in accordance with the invention is also tight, for which reason there is substantially no risk of corrosion. The joint in accordance with the invention may also be provided with tensioning in the radial direction. The connecting piece in accordance with the invention, and so also the paths of movement of the fibres, have round smooth forms, whereby breaking of fibres under strain is less frequent. Further, the joint in accordance with the invention does not increase the diameter essentially, because the joint of the invention is only slightly larger than the outer diameter of the product, such as a pipe.

The invention will be described in detail with reference to some preferred embodiments of the invention shown in the figures in the accompanying drawing, the invention being, however, not supposed to be confined to said embodiments alone.

Figure 1 is an axonometric view of two products made of composite material and connected to each other.

Figure 2 is a schematical view of a detail of a product made of composite material and of the joint with the connecting piece.

Figure 3 is a schematical illustration of the formation of the joint in accordance with the invention and of the passage of one fibre within the joint area.

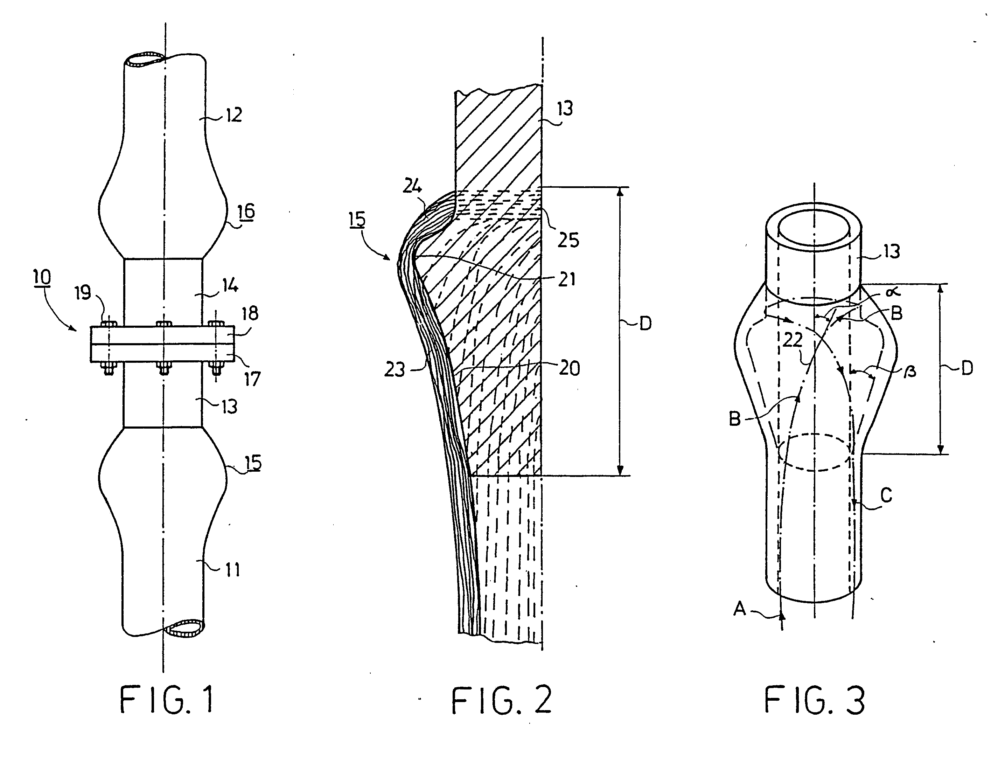

In the embodiment shown in Fig. 1, the unit consisting of the product 11 and 12 made of composite material is denoted generally with the reference numeral 10. In this embodiment, the product made of composite material consists of the pipes 11 and 12, whereat a joint 15 in accordance with the invention is formed between the pipe 11 and the connecting piece 13, and in a corresponding way a joint 16 in accordance with the invention is formed between the pipe 12 and the connecting piece 14. In this embodiment, the pipes 11 and 12 are joined together by means of a flange joint, whereat the connecting piece 13 is related to a flange 17 and, in a corresponding way, the connecting piece 14 is related to a flange 18. The flanges 17 and 18 are fixed in a way in itself known by means of fastening members 19.

As is seen from Figures 2 and 3, the method in accordance with the invention for fixing a connecting piece 13 to a product 11 made of a composite material that contains reinforcing fibres is carried out as follows. As the connecting piece 13, such a piece is used as forms a shoulder 21 in the joint area D. Simultaneously with the manufacture of the product 11, the reinforcing fibres 22, which proceed in the longitudinal direction A of the product 11, are guided in the joint area D so as to run along a turning path B of movement so that the reinforcing fibres 22 turn around the bulging 15 and return in the opposite direction C of progress as unified continuous fibres, whereby, at the same time, both the product 11 of composite material and the joint 15 with the connecting piece 13 are produced. The reinforcing fibre 22 which passes around the shoulder 21 is passed at least once across itself in the joint area D, whereby a self-tightening joint 15 is formed between the product 11 and the connecting piece 13. The reinforcing fibre 22 may be made to pass around the shoulder 21 once or several times before the reinforcement fibre 22 is guided in the opposite direction C of progress. The reinforcing fibre 22 that is used is an uninterrupted, continuous fibre, whereby joints are formed at the same time at both ends of the product 11. Thus, by means of this technique, it is possible to manufacture the embodiment shown in Fig. 1, which is provided with the joints 15 and 16.

As the connecting piece 13 it is advantageous to use a connecting piece 13 in accordance with Fig. 2, which is provided with a shoulder 21 and with a conical portion 20. The location of the reinforcing fibres 22 in the conical part of the joint area is denoted with the reference numeral 23, and in the area behind the shoulder 21 with the reference numeral 24. In the area 25, the reinforcing fibres 22 run substantially perpendicularly to the longitudinal axis of the composite product 11. The route of running 23,24,25 of the reinforcing fibres 22 forms the self-tightening joint 15 described above between the product 11 and the connecting piece 13.

The proceeding of the reinforcing fibres 22 in the area of the conical portion 20 of the connecting piece 13 is advantageously chosen such that the turning path B of movement of the reinforcing fibres 22 runs at an angle $\alpha$, whose magnitude is equal to or larger than one half $\beta$ of the cone angle of the conical portion 20 of the connecting piece 13 defined at the same point. In the latter case, moreover, tightening in the radial direction is also achieved in the area of the conical portion 20.

The method of the invention is by no means critical in respect of the shape of the product 11 made of composite material. The product 11 may be a pipe, a rod, a rectangular product, or any product whatsoever. Likewise, the invention is not critical in respect of the material of the connecting piece 13. The connecting piece 13 may be made of steel, plastic, composite material, wood, or of any other material whatsoever.

Above, only some preferred embodiments of the invention are described, and for a person skilled in the art it is evident that numerous modifications can be made to said embodiments within the scope of the inventive idea defined in the accompanying patent claims.

The invention concerns a method for fixing a connecting piece (13) to a product (11) made of a composite material. As the connecting piece (13), such a piece is used as forms a shoulder (21) within the joint area (D). Simultaneously with the manufacture of the product (11), the reinforcing fibres (22) that proceed in the longitudinal direction (A) of the product (11) are guided within the joint area (D) so as to run along a turning path (B) of movement so that the reinforcing fibres (22) turn around said shoulder (21) and return in the opposite direction (C) of progress as unified continuous fibres, whereby, at the same time, both said product (11) of composite material and the joint (15) with the connecting piece (13) are formed.

## Claims

1. Method for fixing a connecting piece (13) to a product (11) made of a composite material, **characterized** in that, as the connecting piece (13), such a piece is used as forms a shoulder (21) within the joint area (D) and that simultaneously with the manufacture of the product (11), the reinforcing fibres (22) that proceed in the longitudinal direction (A) of the product (11) are guided within the joint area (D) so as to run along a turning path (B) of movement so that the reinforcing fibres (22) turn around said shoulder (21) and return in the opposite direction (C) of progress as unified continuous fibres, whereby, at the same time, both said product (11) of composite material and the joint (15) with the connecting piece (13) are formed.

2. Method as claimed in claim 1, **characterized** in that the reinforcing fibre (22) that passes around said shoulder (21) is passed at least once across itself in the joint area (D), whereby a self-tightening joint (15) is formed between the product (11) and the connecting piece (13).

3. Method as claimed in claim 1 or 2, **characterized** in that the reinforcing fibre (22) is made to pass around said shoulder (21) once or several times before the reinforcing fibre (22) is guided in said opposite direction (C) of progress.

4. Method as claimed in any of the preceding claims, **characterized** in that the reinforcing fibre (22) that is used is an uninterrupted, continuous fibre and that joints (15,16) are formed at the same time at both ends of the product (11).

5. Method as claimed in any of the preceding claims, **characterized** in that the turning path (B) of movement of the reinforcing fibres (22) takes place at an angle ($\alpha$) whose magnitude is equal to or larger than one half ($\beta$) of the cone angle of the conical portion (20) of the connecting piece (13) defined at the same point.

6. Connecting piece intended for carrying out the method as claimed in any of the claims 1 to 5, **characterized** in that the connecting piece (13) comprises a conical portion (20) and a shoulder (21).

FIG. 3

FIG. 2

FIG. 1